# EUROPEAN PATENT APPLICATION

(11) **EP 4 776 444 A1**
(43) Date of publication of application: **15.07.2026**
(21) Application number: 26150153.0
(22) Date of filing: 05.01.2026
(51) Int. Cl.: H01S 3/063, H01S 3/16, H01S 3/23, H01S 3/00, H01S 3/094

(54) **INTEGRATED CERAMIC WAVEGUIDE OPTICAL AMPLIFIERS AND LASER DEVICES**

(30) Priority: 09.01.2025 US 202563743384 P; 22.12.2025 US 202519429689
(71) Applicant: II-VI Delaware, Inc., Wilmington, DE 19890 (US)
(72) Inventor: CHEN, Young-Kai, Wilmington, 19890 (US); TATARCZAK, Anna, Wilmington, 19890 (US)
(74) Representative: Schmidt, Christian

(57) **Abstract**

Optical amplifiers, laser devices, and methods of forming such devices are disclosed. One such method includes forming a lower cladding layer on a substrate and forming a doped ceramic layer on the lower cladding layer. The forming of the doped ceramic layer uses a plasma-assisted process that deposits and co-dopes a ceramic material with rare-earth dopants. The method also includes forming an upper cladding layer on the doped ceramic layer, and etching the upper cladding layer and the doped ceramic layer to form a doped ceramic waveguide.

## Description

### CROSS-REFERENCE TO RELATED APPLICATIONS

The present application claims benefit of and priority to U.S. Provisional Application No. 63/743,384, filed January 9, 2025, the contents of which is hereby incorporated herein by reference in its entirety.

### TECHNICAL FIELD

Aspects of the present disclosure relate to waveguide optical structures such as waveguide optical amplifiers and laser devices.

### BACKGROUND

Conventional ceramic waveguide structures exhibit various disadvantages due, at least in part, to conventional manufacturing processes of such structures. For example, conventional ceramic waveguides structures may exhibit non-uniform doping densities and/or defects that limit operational performance of such ceramic waveguides.

Further limitations and disadvantages of conventional and traditional approaches will become apparent to one of skill in the art, through comparison of such approaches with some aspects of the present disclosure as set forth in the remainder of the present application with reference to the drawings.

### BRIEF SUMMARY OF THE DISCLOSURE

Shown in and/or described in connection with at least one of the figures, and set forth more completely in the claims, are ceramic waveguides, optical structures such as optical amplifiers and laser devices utilizing such ceramic waveguides, and processes for manufacturing such optical structures and their respective ceramic waveguides. Such ceramic waveguides may exhibit more uniform doping distribution and fewer defects than conventional ceramic waveguides.

These and other advantages, aspects, and novel features of the present disclosure, as well as details of illustrated embodiments thereof, will be more fully understood from the following description and drawings.

### BRIEF DESCRIPTION OF THE DRAWINGS

Various features and advantages of the present disclosure may be more readily understood with reference to the following detailed description taken in conjunction with the accompanying drawings, wherein like reference numerals designate like structural elements.
FIG. 1 depicts an embodiment of an integrated doped ceramic waveguide optical amplifier in accordance with various aspects of the present disclosure.
FIG. 2 depicts an embodiment of an integrated doped ceramic waveguide optical amplifier with an optical resonant cavity of pump light in accordance with various aspects of the present disclosure.
FIG. 3 depicts an embodiment of an integrated doped ceramic waveguide laser device in accordance with various aspects of the present disclosure.
FIG. 4 depicts an embodiment of an integrated doped ceramic waveguide laser device with an optical resonant cavity of pump light in accordance with various aspects of the present disclosure.
FIG. 5 depicts a flowchart for a process of manufacturing integrated ceramic optical structures such as the structures of FIGS. 1-4.
FIGS. 6A-6H depict cross-sections of an integrated ceramic optical structure at various stages of the manufacturing process of FIG. 5.
FIGS. 7A and 7B depict example embodiments of a wavelength reference bank in accordance with various aspects of the present disclosure.

### DESCRIPTION

The following discussion provides various examples of ceramic waveguides, optical structures such as optical amplifiers and laser devices utilizing such ceramic waveguides, and processes for manufacturing such optical structures and their respective ceramic waveguides. Such examples are non-limiting, and the scope of the appended claims should not be limited to the particular examples disclosed. In the following discussion, the terms "example" and *"e.g."* are non-limiting.

The figures illustrate a general manner of construction. Descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

The terms "comprises," "comprising," "includes," and/or "including," are "open ended" terms and specify the presence of stated features, but do not preclude the presence or addition of one or more other features.

The terms "first," "second," *etc.* may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Various embodiments are directed to ceramic waveguides, optical structures such as optical amplifiers and laser devices utilizing such ceramic waveguides, and processes for manufacturing such optical structures and their respective ceramic waveguides. Such ceramic waveguides may exhibit more uniform doping distribution and fewer defects than conventional ceramic waveguides.

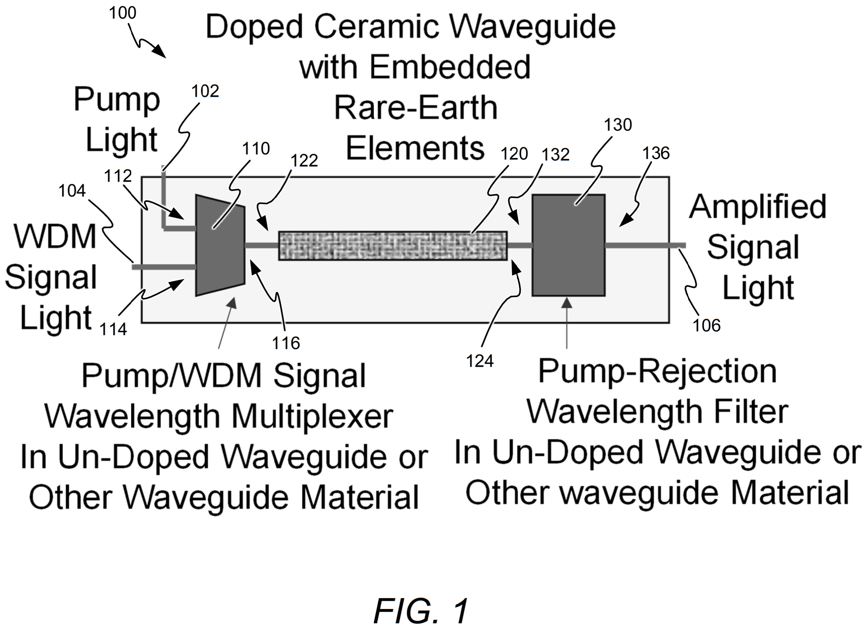

Referring now to FIG. 1, an embodiment of an integrated doped ceramic waveguide optical amplifier 100 in accordance with various aspects of the present disclosure is depicted. The optical amplifier 100 may include a pump light input 102, a wavelength division multiplexing (WDM) optical signal input 104, and a WDM optical signal output 106. The pump light input 102 of the optical amplifier 100 may receive pump light and the WDM optical signal input 104 may receive a WDM optical input signal. Based on the received pump light and the WDM optical input signal, the optical amplifier 100 may output, via the WDM optical signal output 106, a WDM optical signal that is amplified version of the WDM optical signal received via the WDM optical signal input 104.

To this end, the optical amplifier 100 may comprise a multiplexer 110, a doped ceramic waveguide 120, and a filter 130. The multiplexer 110 may comprise a pump light input 112, a WDM optical signal input 114, and a combined optical signal output 116. The pump light input 112 of the multiplexer 110 may receive pump light from the pump light input 102 of the optical amplifier 100. Similarly, the WDM optical signal input 114 of the multiplexer 110 may receive the WDM optical input signal from the WDM optical signal input 104 of the optical amplifier 100. Further, the multiplexer 110 may combine the pump light and WDM optical input signal and inject the combined optical signal into the doped ceramic waveguide 120.

The doped ceramic waveguide 120 may comprise a waveguide input 122 and a waveguide output 124. The doped ceramic waveguide 120 may receive the combined optical signal light from the multiplexer 110 via its waveguide input 122. Moreover, the doped ceramic waveguide 120 may guide the combined optical signal to its waveguide output 124 and the filter 130.

As the combined optical signal propagates along the doped ceramic waveguide 120, the pump light may excite rare-earth ions of the doped ceramic waveguide 120 to a higher-energy state. When photons of the WDM optical signal encounter the excited rare-earth ions, the rare-earth ions may undergo stimulated emission and return to a lower-energy state. In their return to the lower-energy state, the rare-earth ions may give up their energy in the form of additional photons which are exactly in the same phase and direction as the WDM optical signal. In this manner, the pump light and its interaction with the rare-earth ions may amplify the WDM optical signal as the pump light and the WDM optical signal propagate along the length of the doped ceramic waveguide 120. To this end, the ceramic material of the waveguide 120 may be doped with rare-earth atoms such as erbium (Er), presidium (Pr), Holmium (Ho), Ba, Sr, Ca, Yb, etc.

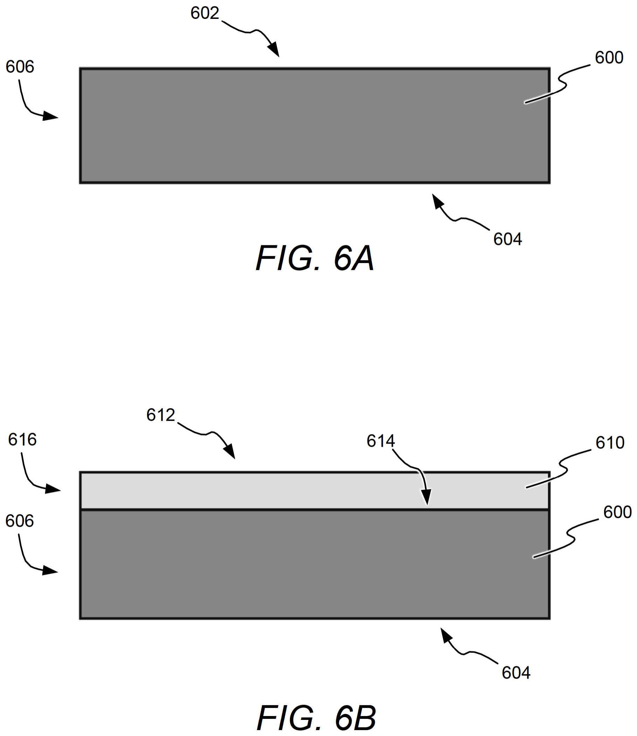

The ceramic material of the doped ceramic waveguide 120 may have a wide bandgap energy. For example, the doped ceramic waveguide 120 may have a bandgap energy that is greater than or equal to 1.2 times higher than the incoming photon energy of the WDM optical signal or the pump light. The ceramic material may also have an electrical resistance that is greater than or equal to 1M ohm-cm, and a refractive index that is greater than or equal to 1.1 times higher than refractive indices of the cladding material (e.g., material of cladding layers 610, 630, 640 of FIGS. 6A-6H). To this end, the host ceramic materials of the doped ceramic waveguide 120 may be formed using ceramic matrix compounds comprising base materials such as SiC, AIN, AIN, AlNₓO_{y}, Al₂O₃, BN, GaN, GaO, LiNbO₃, dielectric materials such as SiN, SiNO, glasses, garnets, *etc.* Such materials may form the doped ceramic waveguide 120 with a higher index of refraction than the surrounding cladding material. Further such materials may provide the doped ceramic waveguide 12 with low optical loss at both the operating wavelengths of the WDM optical signal and the pump light. Depending on the operating wavelength and optical gain provided by the pump light, many rare-earth dopants, such as Erbium (Er), Ytterbium (Yb), Neodymium (Nd), Praseodymium (Pr), Holmium (Ho), Thulium (Tm³⁺), *etc.* may be incorporated to adjust optical properties for optimal optical performance.

Further, depending on the type of embedded rare-earth dopants in the doped ceramic waveguide 120, the optical amplifier 100 as well as the other optical amplifiers and/or laser devices disclosed herein may provide amplification or emitting sources that operate at common wavelengths. For example, Erbium dopants may generate signals for 1500nm telecom bands, ytterbium (Yb) for 1 µm bands, neodymium (Nd) for 1060 nm/1300 nm bands, praseodymium (Pr) for 1300 nm bands, holmium (Ho) or thulium (Tm) 1-2 µm infrared bands.

The filter 130 may comprise a combined optical signal input 132 and a WDM optical signal output 136. The combined optical signal input 132 of the filter 130 may receive a combined optical signal that includes the pump light and the amplified WDM optical input signal from the doped ceramic waveguide 120. The filter 130 may reject, filter out, or otherwise reduce the received pump light so as to output, via its WDM optical signal output 136, a WDM optical signal comprising the amplified WDM input signal received from the doped ceramic waveguide 120. Moreover, the filter 130 may provide the WDM optical signal to the WDM optical signal output 106 of the optical amplifier 100.

In various embodiments, the multiplexer 110 and/or the filter 130 may be implemented using undoped waveguide materials and/or waveguide materials other than ceramic. As such, the multiplexer 110 and/or the filter 130 may be implemented with waveguide materials that differ from the doped ceramic materials used to implement the doped ceramic waveguide 120.

In various embodiments, the optical amplifier 100 as well as other optical amplifiers and/or laser devices disclosed herein may be designed to maximize coupling efficiency between its facets and external optical fibers. For example, the facets may be coated with dielectric layers that provide an anti-reflective coating.

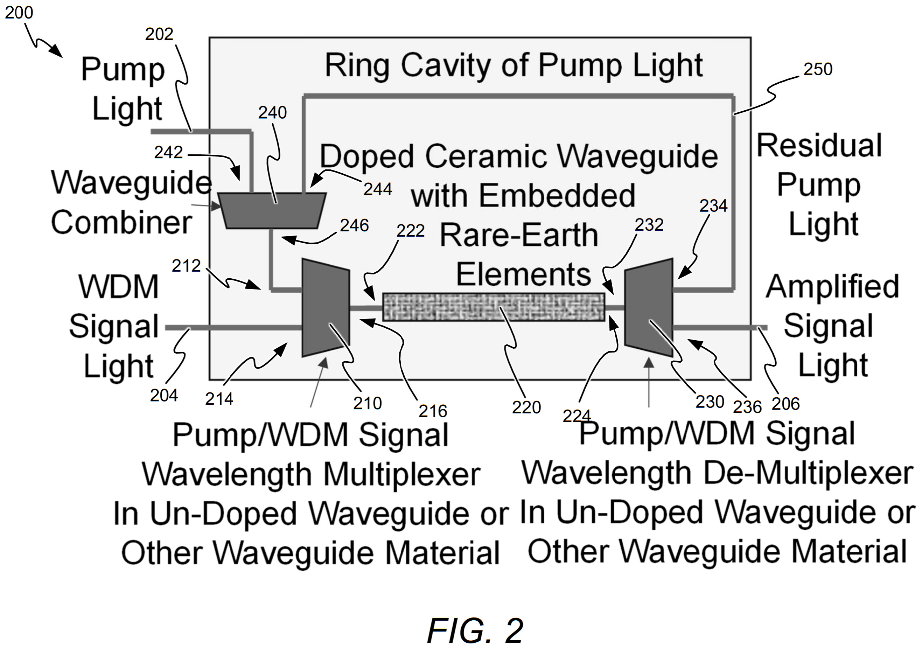

Referring now to FIG. 2, an embodiment of an integrated doped ceramic waveguide optical amplifier 200 is depicted in accordance with various aspects of the present disclosure. The optical amplifier 200 may include a pump light input 202, a WDM optical signal input 204, and a WDM optical signal output 206. The pump light input 202 of the optical amplifier 200 may receive pump light and the WDM optical signal input 204 may receive a WDM optical signal. Based on the received pump light and the received WDM optical signal, the optical amplifier 200 may output an amplified version of the received WDM optical signal via its WDM optical signal output 206.

To this end, the optical amplifier 200 may comprise a multiplexer 210, a doped ceramic waveguide 220, a demultiplexer 230, an optical signal combiner 240, and a ring cavity 250. The multiplexer 210 may comprise a pump light input 212, a WDM optical signal input 214, and a combined optical signal output 216. The pump light input 212 of the multiplexer 210 may receive pump light from a pump light output 246 of the optical signal combiner 240. Further, the WDM optical signal input 214 of the multiplexer 210 may receive the WDM optical signal from the WDM optical signal input 204 of the optical amplifier 200. Further, the multiplexer 210 may output a combined optical signal comprising the pump light and the WDM optical signal into the doped ceramic waveguide 220.

The doped ceramic waveguide 220 may comprise a waveguide input 222 and a waveguide output 224. The doped ceramic waveguide 220 may receive the combined optical signal from the multiplexer 210 via its waveguide input 222. Moreover, the doped ceramic waveguide 220 may guide the combined optical signal to its waveguide output 224 and the demultiplexer 230.

As the combined optical signal propagates along the doped ceramic waveguide 220, the pump light may excite rare-earth ions of the doped ceramic waveguide 220 to a higher-energy state. When photons of the WDM optical signal encounter the excited rare-earth ions, the rare-earth ions may undergo stimulated emission and return to a lower-energy state. In their return to the lower-energy state, the rare-earth ions may give up their energy in the form of additional photons which are exactly in the same phase and direction as the WDM optical signal. In this manner, the pump light and its interaction with the rare-earth ions may amplify the WDM optical signal as the pump light and the WDM optical signal propagate along the length of the doped ceramic waveguide 220. To this end, the ceramic material of the waveguide 220 may be doped with rare-earth atoms such as erbium (Er), presidium (Pr), Holmium (Ho), Ba, Sr, Ca, Yb, *etc.*

The ceramic material of the doped ceramic waveguide 220 may have a wide bandgap energy. For example, the doped ceramic waveguide 220 may have a bandgap energy that is greater than or equal to 1.2 times higher than the incoming photon energy of the WDM optical signal or the pump light. The ceramic material may also have an electrical resistance that is greater than or equal to 1M ohm-cm, and a refractive index that is greater than or equal to 1.1 times higher than refractive indices of the cladding material (e.g., material of cladding layers 610, 630, 640 of FIGS. 6A-6H). To this end, the host ceramic materials of the doped ceramic waveguide 220 may be formed using ceramic matrix compounds comprising base materials such as SiC, AIN, AIN, AlNₓO_{y}, Al₂O₃, BN, GaN, GaO, LiNbO₃ and dielectric materials such as SiN, SiNO, glasses, *etc.*

The demultiplexer 230 may comprise a combined optical input 232 and a pump light output 234 and a WDM optical signal output 236. The combined optical input 232 may receive a combined optical signal from the doped ceramic waveguide 220 that includes residual pump light and an amplified version of the WDM optical signal. The demultiplexer 230 may demultiplex the residual pump light from combined optical signal and direct the residual pump light to its pump light output 234 and the ring cavity 250. Similarly, the demultiplexer 230 may demultiplex the amplified WDM optical signal from combined optical signal and direct the amplified WDM optical signal light to its WDM optical signal output 236 and the WDM optical signal output 206 of the optical amplifier 200.

The ring cavity 250 may receive the residual pump light from the demultiplexer 230 and direct such residual pump light to the optical signal combiner 240. The optical signal combiner 240 may comprise a pump light input 242, a residual pump light input 244, and a pump light output 246. The pump light input 242 of the optical signal combiner 240 may receive pump light from the pump light input 202 of the optical amplifier 200 and the residual pump light input 244 of the optical signal combiner 240 may receive residual pump light from the ring cavity 250. The optical signal combiner 240 may combine the received pump light and residual pump light and direct the combined pump light to its pump light output 246 and the pump light input 212 of the multiplexer 210.

In various embodiments, the multiplexer 210, the demultiplexer 230, the optical signal combiner 240, and/or the ring cavity 250 may be implemented using undoped waveguide materials and/or waveguide materials other than ceramic. As such, the multiplexer 210, demultiplexer 230, the optical signal combiner 240, and/or the ring cavity 250 may be implemented with waveguide materials that differ from the doped ceramic materials used to implement the doped ceramic waveguide 220.

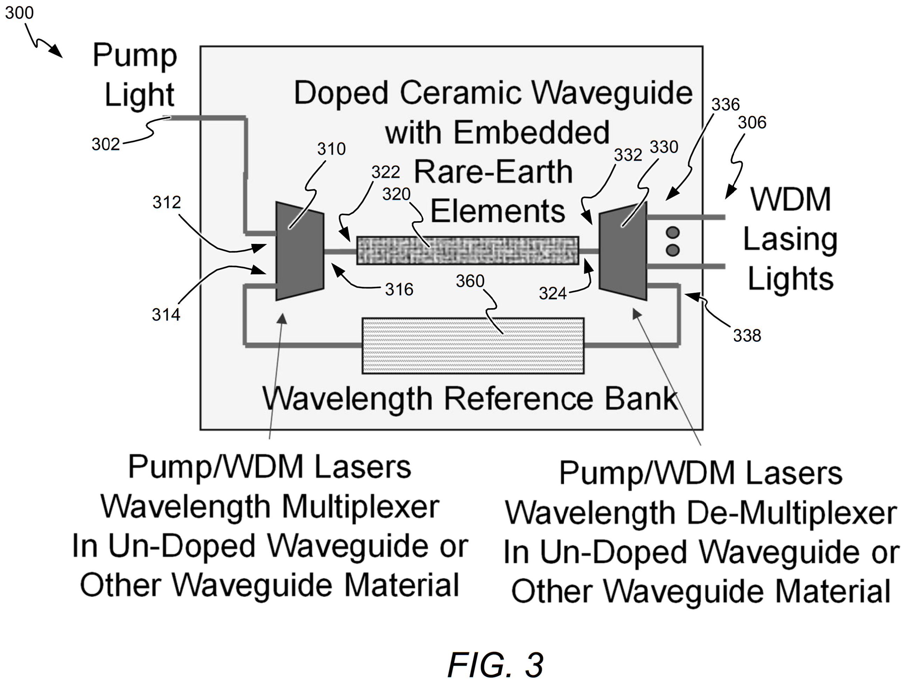

Referring now to FIG. 3, an embodiment of an integrated doped ceramic waveguide laser device 300 in accordance with various aspects of the present disclosure is depicted. The laser device 300 may include a pump light input 302 and WDM lasing light outputs 306. The pump light input 302 of the laser device 300 may receive pump light. Based on the received pump light, the laser device 300 may generate and output WDM lasing lights via its WDM lasing light outputs 306.

To this end, the laser device 300 may comprise a multiplexer 310, a doped ceramic waveguide 320, a demultiplexer 330, and a wavelength reference bank 360. The multiplexer 310 may comprise a pump light input 312, a WDM optical signal input 314, and a combined optical signal output 316. The pump light input 312 of the multiplexer 110 may receive pump light from the pump light input 302 of the laser device 300. The WDM optical signal input 314 of the multiplexer 110 may receive a WDM optical signal from the wavelength reference bank 360. Further, the multiplexer 310 may output and inject the combined optical signal comprising the pump light and the WDM optical signal light into the doped ceramic waveguide 320.

The doped ceramic waveguide 320 may comprise a waveguide input 322 and a waveguide output 324. The doped ceramic waveguide 320 may receive the combined optical signal light from the multiplexer 310 via its waveguide input 322. Moreover, the doped ceramic waveguide 320 may guide the combined optical signal to its waveguide output 324 and the demultiplexer 330.

As the combined optical signal propagates along the doped ceramic waveguide 320, the pump light may excite rare-earth ions of the doped ceramic waveguide 320 to a higher-energy state. When photons of the WDM optical signal encounter the excited rare-earth ions, the rare-earth ions may undergo stimulated emission and return to a lower-energy state. In their return to the lower-energy state, the rare-earth ions may give up their energy in the form of additional photons which are exactly in the same phase and direction as the WDM optical signal. In this manner, the pump light and its interaction with the rare-earth ions may amplify the WDM optical signal as the pump light and the WDM optical signal propagate along the length of the doped ceramic waveguide 320. To this end, the ceramic material of the waveguide 320 may be doped with rare-earth atoms such as erbium (Er), presidium (Pr), holmium (Ho), Ba, Sr, Ca, Yb, *etc.*

The ceramic material of the doped ceramic waveguide 320 may have a wide bandgap energy. For example, the doped ceramic waveguide 320 may have a bandgap energy that is greater than or equal to 1.2 times higher than the incoming photon energy of the WDM optical signal or the pump light. The ceramic material may also have an electrical resistance that is greater than or equal to 1M ohm-cm, and a refractive index that is greater than or equal to 1.1 times higher than refractive indices of the cladding material (e.g., material of cladding layers 610, 630, 640 of FIGS. 6A-6H). To this end, the host ceramic materials of the doped ceramic waveguide 220 may be formed using ceramic matrix compounds comprising base materials such as SiC, AIN, AIN, AlNₓO_{y}, Al₂O₃, BN, GaN, GaO, LiNbO₃ and dielectric materials such as SiN, SiNO, glasses, *etc.*

The demultiplexer 330 may comprise a WDM optical signal input 332, WDM lasing outputs 336, and a WDM optical signal output 338. The demultiplexer 330 may receive a combined optical signal via its WDM optical signal input 332 that includes residual pump light, an amplified version of the WDM optical signal, and WDM lasing lights. The demultiplexer 330 may demultiplex the combined optical signal and direct the WDM lasing lights to the WDM lasing outputs 336 and the WDM lasing light outputs 306 of the laser device 300. Moreover, the demultiplexer 330 may direct the amplified WDM optical signal to the multiplexer 310 via its WDM optical signal output 338 and the wavelength reference bank 360.

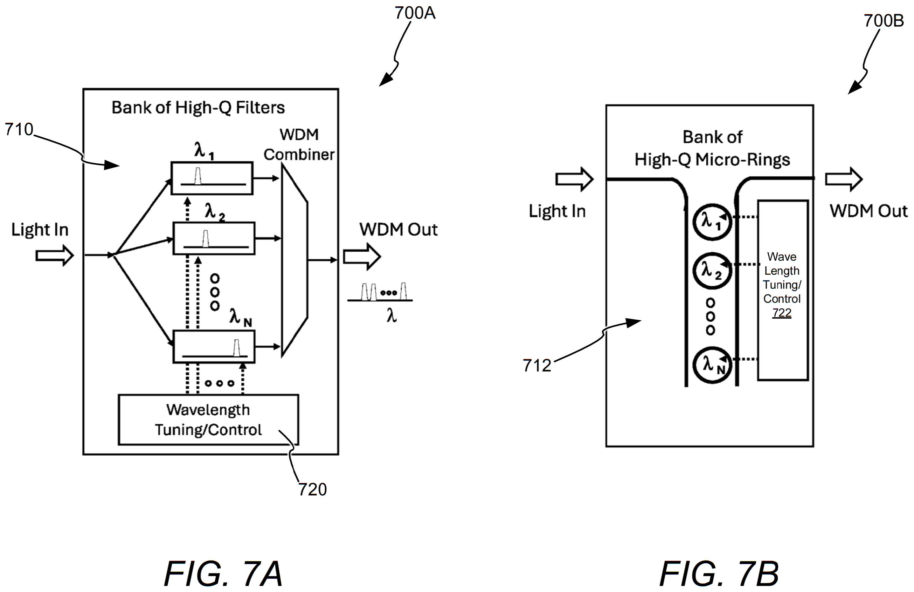

FIG. 7A depicts a wavelength reference bank 700A suitable for implementing the wavelength reference bank 360. In particular, the wavelength reference bank 700A may include a group or bank of high quality (Hi-Q) wavelength filters 710 and a wavelength tuning controller 720. Each Hi-Q wavelength filter 710 may pass a portion of light received from the input of the wavelength reference bank 700A that falls within a prescribed passband of the respective Hi-Q wavelength filter 710 to an output of the wavelength reference bank 700A. In this manner, the wavelength reference bank 700A may provide a wavelength selective feedback loop that produces lasing operation at the prescribed passband wavelengths of the Hi-Q wavelength filters 710.

The wavelength tuning controller 720 may control and/or tune the prescribed passbands and thus may control and/or tune the lasing wavelengths of the laser device 300. To this end, the wavelength tuning controller 720 may include heaters to control the operating temperature of the Hi-Q filters 710, current controllers that control injected current to the Hi-Q filters 720, and/or voltage controller that control voltage applied to the Hi-Q filters 720.

FIG. 7B depicts another wavelength reference bank 700B suitable for implementing the wavelength reference bank 360. In particular, the wavelength reference bank 700B may include a group or bank of high quality (Hi-Q) micro-ring resonators 712 and a wavelength tuning controller 722. Each Hi-Q micro-ring resonator 712 may resonate with a portion of light received from the input of the wavelength reference bank 700B that falls within a prescribed waveband of the respective Hi-Q micro-ring resonator 712 and may pass light of the prescribed waveband to an output of the wavelength reference bank 700B. In this manner, the wavelength reference bank 700B may provide a wavelength selective feedback loop that produces lasing operation at the prescribed wavebands of the Hi-Q micro-ring resonators 712. In other embodiments, the wavelength reference bank 360 may be implemented using resonant etalons, grating couplers, and/or other waveband selective components instead of, or in addition to, the Hi-Q wavelength filters 710 and Hi-Q micro-ring resonators 712 of FIGS. 7A and 7B.

In various embodiments, the multiplexer 310, demultiplexer 330, and/or wavelength reference bank 360 may be implemented using undoped waveguide materials and/or waveguide materials other than ceramic. As such, the multiplexer 310, demultiplexer 330, and/or wavelength reference bank 360 may be implemented with waveguide materials that differ from the doped ceramic materials used to implement the doped ceramic waveguide 320.

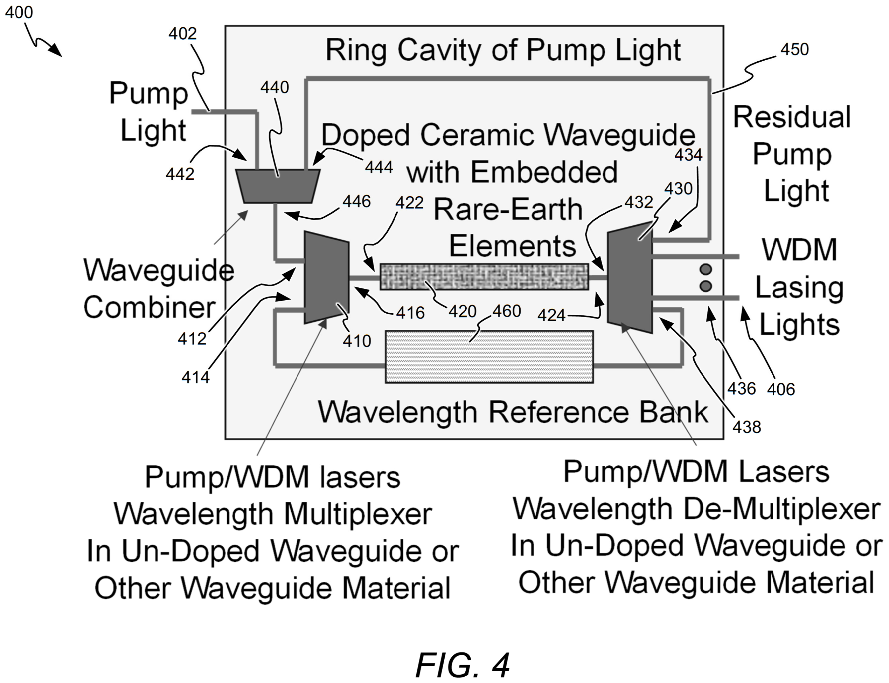

Referring now to FIG. 4, an embodiment of integrated doped ceramic waveguide laser device 400 is depicted in accordance with various aspects of the present disclosure. The laser device 400 may include a pump light input 402 and WDM lasing outputs 406. The pump light input 402 of the laser device 400 may receive pump light. Based on the received pump light, the laser device 400 may output WDM lasing lights via its WDM lasing outputs 406.

To this end, the laser device 400 may comprise a multiplexer 410, doped ceramic waveguide 420, a demultiplexer 430, an optical signal combiner 440, a ring cavity 450, and a wavelength reference bank 460. The multiplexer 410 may comprise a pump light input 412, a WDM optical signal input 414, and a combined optical signal output 416. The pump light input 412 of the multiplexer 410 may receive pump light from a pump light output 446 of the optical signal combiner 440. Further, the WDM optical signal input 414 of the multiplexer 410 may receive a WDM optical signal from the wavelength reference bank 460. The multiplexer 410 may output and a combined optical signal comprising the pump light and the WDM optical signal into the doped ceramic waveguide 420.

The doped ceramic waveguide 420 may comprise a waveguide input 422 and a waveguide output 424. The doped ceramic waveguide 420 may receive the combined optical light from the multiplexer 410 via its waveguide input 422. Moreover, the doped ceramic waveguide 420 may guide the combined optical signal to its waveguide output 424 and the demultiplexer 430.

As the combined optical signal propagates along the doped ceramic waveguide 420, the pump light may excite rare-earth ions of the doped ceramic waveguide 420 to a higher-energy state. When photons of the WDM optical signal encounter the excited rare-earth ions, the rare-earth ions may undergo stimulated emission and return to a lower-energy state. In their return to the lower-energy state, the rare-earth ions may give up their energy in the form of additional photons which are exactly in the same phase and direction as the WDM optical signal. In this manner, the pump light and its interaction with the rare-earth ions may amplify the WDM optical signal as the pump light and the WDM optical signal propagate along the length of the doped ceramic waveguide 420. To this end, the ceramic material of the waveguide 420 may be doped with rare-earth atoms such as erbium (Er), presidium (Pr), holmium (Ho), Ba, Sr, Ca, Yb, *etc.*

The ceramic material of the doped ceramic waveguide 420 may have a wide bandgap energy. For example, the doped ceramic waveguide 420 may have a bandgap energy that is greater than or equal to 1.2 times higher than the incoming photon energy of the WDM optical signal or the pump light. The ceramic material may also have an electrical resistance that is greater than or equal to 1M ohm-cm, and a refractive index that is greater than or equal to 1.1 times higher than refractive indices of the cladding material (e.g., material of cladding layers 610, 630, 640 of FIGS. 6A-6H). To this end, the host ceramic materials of the doped ceramic waveguide 220 may be formed using ceramic matrix compounds comprising base materials such as SiC, AIN, AIN, AlNₓO_{y}, Al₂O₃, BN, GaN, GaO, LiNbO₃ and dielectric materials such as SiN, SiNO, glasses, *etc.*

The demultiplexer 430 may comprise a combined optical signal input 432, a pump light output 434, and WDM lasing light outputs 436. The demultiplexer 430 may receive a combined optical signal via its combined optical signal input 432 that includes residual pump light, an amplified version of the WDM optical signal, and WDM lasing lights. The demultiplexer 430 may demultiplex the residual pump light from the combined optical light and direct the residual pump light to its pump light output 434 and the ring cavity 450. Similarly, the demultiplexer 430 may demultiplex WDM lasing light from the combined optical signal and direct the WDM lasing light to its WDM lasing light outputs 436 and the WDM lasing signal outputs 306 of the laser device 400. Moreover, the demultiplexer 430 may direct the amplified WDM optical signal to the multiplexer 410 via its WDM optical signal output 438 and the wavelength reference bank 460, which may be implemented in manner similar to the wavelength reference bank 360 of FIG. 3.

The ring cavity 450 may receive the residual pump light from the demultiplexer 430 and direct such residual pump light to the optical signal combiner 440. The optical signal combiner 440 may comprise a pump light input 442, a residual pump light input 444, and a pump light output 446. The pump light input 442 of the optical signal combiner 440 may receive pump light from the pump light input 402 of the laser device 400 and the residual pump light input 444 of the optical signal combiner 440 may receive residual pump light from the ring cavity 450. The optical signal combiner 440 may combine the received pump light and residual pump light and direct the combined pump light to its pump light output 446 and the pump light input 412 of the multiplexer 410.

In various embodiments, the multiplexer 410, the demultiplexer 430, the optical signal combiner 440, the ring cavity 450, and/or the wavelength reference bank 460 may be implemented using undoped waveguide materials and/or waveguide materials other than ceramic. As such, the multiplexer 410, the demultiplexer 430, the optical signal combiner 440, the ring cavity 450, and/or the wavelength reference bank 460 may be implemented with waveguide materials that differ from the doped ceramic materials used to implement the doped ceramic waveguide 220.

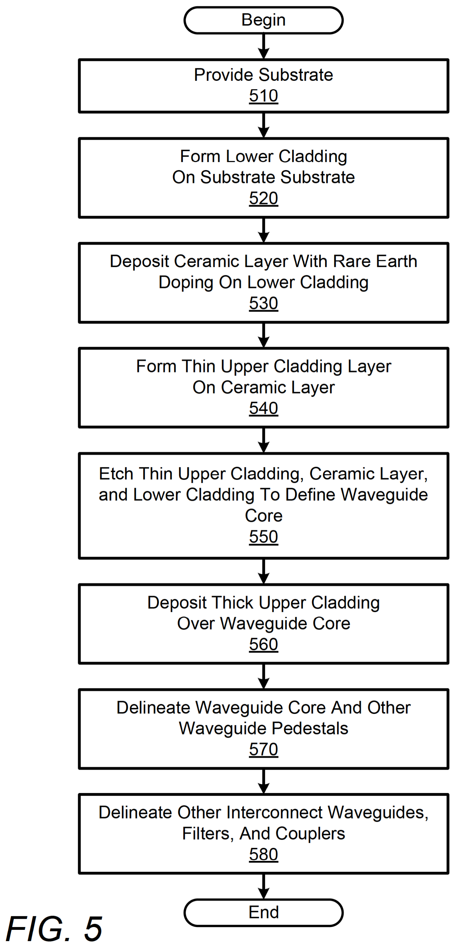

Referring now to the flowchart of FIG. 5 and the cross-sections of FIGS. 6A-6H, a process 500 of manufacturing optical structures with doped ceramic waveguides such as, for example, the structures of FIGS. 1-4 are described. In particular, the process 500 at 510 may begin by providing a substrate 600. The substrate 600 may comprise a substrate top side 602, a substrate bottom side 604, and one or more substrate lateral sides 606 between the substrate top side 602 and substrate bottom side 604. The substrate 600 may comprise silicon, InP, GaAs, other semiconductor materials, glass, sapphire, ceramic materials, metals, *etc.* See, e.g., FIG. 6A.

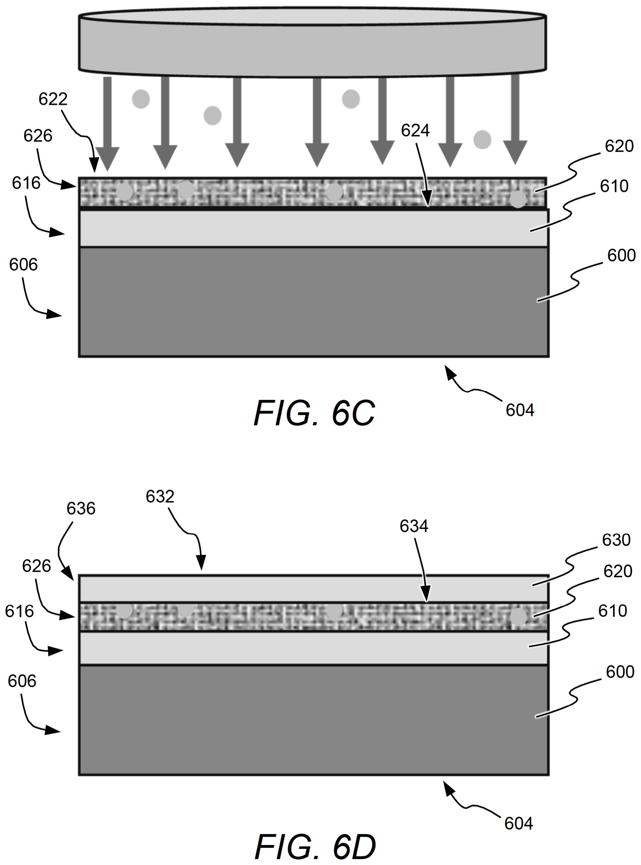

At 520, the process 500 may form a lower cladding layer 610 on the substrate 600. See, *e.g.,* FIG. 6B. In particular, the lower cladding layer 610 may comprise a lower cladding layer top side 612, a lower cladding layer bottom side 614 contacting the substrate top side 602, and one or more lower cladding layer lateral sides 616 between the lower cladding layer top side 612 and the lower cladding layer bottom side 614. The lower cladding layer 610 may comprise various dielectric materials such as SiO₂, SiN, SiNO, polymer, etc. that provide a low optical loss and a lower refractive index than the respective waveguide core materials such as the doped ceramic layer 620 of FIG. 6C.

After formation of the lower cladding layer 610, a doped ceramic layer 620 may be formed on the lower cladding layer 610 at 530. See, e.g., FIG. 6C. As shown, the doped ceramic layer 620 may comprise a ceramic layer top side 622, a ceramic layer bottom side 624 contacting the lower cladding layer top side 612, and one or more ceramic layer lateral sides 626 between the ceramic layer top side 622 and the ceramic layer bottom side 624. In particular, the doped ceramic layer 620 may be doped with various rare-earth dopants such as erbium (Er), presidium (Pr), holmium (Ho), Ba, Sr, Ca, Yb, *etc.* As explained above, such rare-earth dopants may be excited by the pump light and may impart optical gain to a WDM optical signal as the pump light and WDM optical signal propagate through the doped ceramic layer 620.

To this end, the process 500 may utilize plasma-assisted deposition of ceramic to co-dope and form the doped ceramic layer 620 with rare-earth dopants. Plasma-assisted deposition of the doped ceramic layer 620 may provide various advantages over conventional processes for forming and doping ceramic materials. In particular, rare-earth dopants may be carried by plasma and deposited with the host waveguide material (e.g., the ceramic material of the doped ceramic layer 620). Such plasma-assisted deposition may ensure a consistent and high-quality layer over diverse surfaces and at low temperatures in comparison to conventional processes such as, for example, chemical vapor deposition (CVD). Such uniformity assures that pump light illuminates a uniformly distributed rare-earth material layer at high density and without rare-earth material clusters, thus permitting high optical gain.

Further, ion implantation processes may impart ion-induced damage in the resulting ceramic layer due to the implantation of the ions. Plasma-assisted deposition avoids such ion-induced damages, which may result in a doped ceramic layer 620 with fewer optical defects. The high deposition temperatures of CVD may diffuse the rare earth dopants and cause clustering of such rare earth dopants. Plasma-assisted deposition may utilize lower temperature deposition processes thus avoiding the clustering issues of conventional CVD processes. Such lower deposition temperatures may also aid in depositing wide-gap materials with co-doped rare-earth elements *(e.g.,* dielectric or ceramics) and may do so without introducing defects into previously-formed cladding layers such as the lower cladding layer 610.

At 540, the process 500 may form a thin upper cladding layer 630 on the doped ceramic layer 620. See, e.g., FIG. 6D. In particular, the thin upper cladding layer 630 may comprise a thin upper cladding layer top side 632, a thin upper cladding layer bottom side 634 contacting the ceramic layer top side 622, and one or more thin upper cladding layer lateral sides 636 between the thin upper cladding layer top side 632 and the thin upper cladding layer bottom side 634. Similar to the lower cladding layer 610, the thin upper cladding layer 630 may comprise various dielectric materials such as SiO₂, SiN, SiNO, polymer, *etc.* that provide a low optical loss and a lower refractive index than the respective waveguide core materials such as doped ceramic layer 620 of 530 and FIG. 6C.

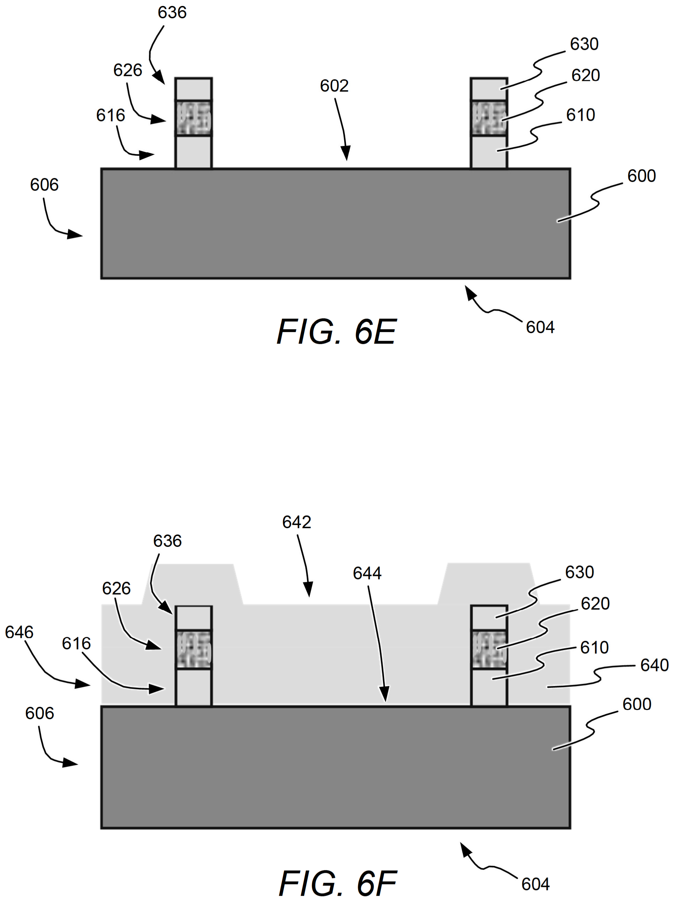

At 550, the process 500 may etch the thin upper cladding layer 630, the doped ceramic layer 620, and the lower cladding layer 610 to define or otherwise delineate doped ceramic waveguides and/or other optical structures such as the optical structures of FIGS. 1-4. In various embodiments, such etching/delineation of the doped ceramic layer 620 and/or cladding layers 610, 630 may be performed using dry etching processes and/or ion milling processes. See, e.g., FIG. 6E.

At 560, the process 500 may form a thick upper cladding layer 640 over the thin upper cladding layer top side 632, the substrate top side 602, and exposed lateral sides 616, 626, 636 of the lower cladding layer 610, the doped ceramic layer 620, and the thin upper cladding layer 630. See, *e.g.,* FIG. 6F. In particular, the thick upper cladding layer 640 may comprise a thick upper cladding layer top side 642, a thick upper cladding layer bottom side 644 contacting the substrate top side 602, and one or more thick upper cladding layer lateral sides 646 between the thick upper cladding layer top side 642 and the thick upper cladding layer bottom side 644. Moreover, the one or more thick upper cladding layer lateral sides 646 may contact and cover the exposed lateral sides 616, 626, 636 of the lower cladding layer 610, the doped ceramic layer 620, and the thin upper cladding layer 630. Similar to the thin upper cladding layer 630, the thick upper cladding layer 640 may comprise various dielectric materials such as SiO₂, SiN, SiNO, polymer, *etc.* that provide a low optical loss and a lower refractive index than the respective waveguide core materials such as doped ceramic layer 620 of 530 and FIG. 6C.

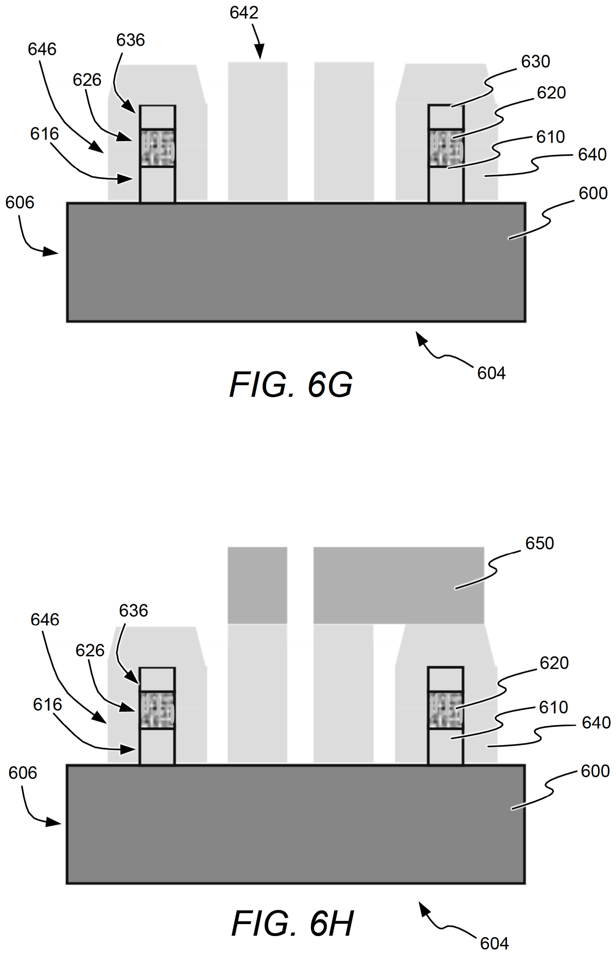

At 570, the process 500 may etch the thick upper cladding layer 640 to define or otherwise delineate cladded doped ceramic waveguides and/or other optical structures such as the optical structures of FIGS. 1-4. Further, such etching may define or otherwise delineate waveguide and/or other optical structures not utilizing the doped ceramic layer 620. See, e.g., FIG. 6G. In various embodiments, such etching/delineation may be performed using dry etching processes and/or ion milling processes in a manner similar to the etching at 550. However, in some cases, other etching processes such as chemical etching process may be utilized.

Finally, the process 500 may complete the formation of the respective optical structures at 580. In particular, the process 500 may form and delineate additional layers 650 so as to form and interconnect waveguides, filters, multiplexers, demultiplexers, optical signal combiners, wavelength reference banks, *etc.* of the respective optical structures. See, e.g., FIG. 6H.

This disclosure may relate to the following implementations: Optical amplifiers, laser devices, and methods of forming such devices are disclosed. One such method includes forming a lower cladding layer on a substrate and forming a doped ceramic layer on the lower cladding layer. The forming of the doped ceramic layer uses a plasma assisted process that deposits and co dopes a ceramic material with rare earth dopants. The method also includes forming an upper cladding layer on the doped ceramic layer, and etching the upper cladding layer and the doped ceramic layer to form a doped ceramic waveguide.

The present application claims priority of US patent applications US 63/743,384 filed on January 9, 2025 and US 19/429,689 filed on December 22, 2025. The entire disclosure content of these applications is hereby incorporated herein by reference for all purposes.

In the following, a set of items is disclosed. The items are numbered to facilitate referencing the features of one item in other items. The items form part of the present disclosure and could be made subject to independent and/or dependent claims irrespective of what currently is claimed in the application. We note, however, that the scope of protection is defined by the appended claims, where the following items do not constitute claims. The items are:
1. An optical device, comprising:
   a multiplexer comprising a pump light input to receive a pump light, a wavelength division multiplexing (WDM) optical signal input to receive a WDM optical signal, and a combined optical signal output to which the multiplexer provides a combined optical signal comprising the pump light received via the pump light input and the WDM optical signal received via the WDM optical signal input; and
   a ceramic waveguide comprising a waveguide input coupled to the combined optical signal output of the multiplexer to receive the combined optical signal provided by the multiplexer; and
   wherein the ceramic waveguide comprises rare-earth dopants that impart the WDM optical signal of the combined optical signal with optical gain as the pump light and the WDM optical signal of the combined optical signal propagate along the ceramic waveguide.
2. The optical device of item 1, comprising:
   a filter coupled to a waveguide output of the ceramic waveguide to receive residual pump light and the WDM optical signal; and
   wherein the filter is configured to filter the residual pump light from the WDM optical signal and provide the WDM optical signal to a WDM optical signal output.
3. The optical device of item 1, comprising:
   an optical signal combiner comprising a pump light input to receive pump light, a residual pump light input to receive residual pump light, and pump light output coupled to the pump light input of the multiplexer, wherein the optical signal combiner is configured to provide its pump light output with pump light comprising the pump light received via its pump light input and the residual pump light received via its residual pump light input; and
   a ring cavity configured to direct residual pump light from a waveguide output of the ceramic waveguide to the residual pump light input of the optical signal combiner.
4. The optical device of item 1, comprising
   an optical signal combiner comprising a pump light input to receive pump light, a residual pump light input to receive residual pump light, and pump light output coupled to the pump light input of the multiplexer, wherein the optical signal combiner is configured to provide its pump light output with pump light comprising the pump light received via its pump light input and the residual pump light received via its residual pump light input;
   a demultiplexer coupled to a waveguide output of the ceramic waveguide to receive the residual pump light; and
   a ring cavity configured between the demultiplexer and the optical signal combiner; and
   wherein the demultiplexer is configured to direct the residual pump light from the waveguide output to the residual pump light input of the optical signal combiner via the ring cavity.
5. The optical device of item 4, wherein the demultiplexer is configured to direct the WDM optical signal received from the waveguide output to a WDM optical signal output.
6. The optical device of item 1, comprising:
   a demultiplexer coupled to a waveguide output of the ceramic waveguide to receive the WDM optical signal; and
   a wavelength reference bank between the multiplexer and the demultiplexer; and
   wherein the demultiplexer is configured to direct the WDM optical signal from the waveguide output to the multiplexer via the wavelength reference bank.
7. The optical device of item 6, wherein the demultiplexer is configured to direct WDM lasing lights received from the waveguide output to WDM lasing light outputs.
8. The optical device of item 6, comprising:
   an optical signal combiner comprising a pump light input to receive pump light, a residual pump light input to receive residual pump light, and a pump light output coupled to the pump light input of the multiplexer, wherein the optical signal combiner is configure to provide its pump light output with pump light comprising the pump light received via its pump light input and the residual pump light received via its residual pump light input; and
   a ring cavity configured to direct residual pump light from the waveguide output to the residual pump light input of the optical signal combiner.
9. The optical device of item 8, wherein the demultiplexer is configured to direct WDM lasing lights received from the waveguide output to WDM lasing light outputs.
10. A method of forming an optical device, the method comprising:
   forming a lower cladding layer on a substrate;
   forming a doped ceramic layer on the lower cladding layer using a plasma-assisted process that deposits and co-dopes a ceramic material with rare-earth dopants;
   forming a first upper cladding layer on the doped ceramic layer; and
   removing portions of the first upper cladding layer and the doped ceramic layer to form a doped ceramic waveguide.
11. The method of item 10, comprising:
   forming a second upper cladding layer over the first upper cladding layer and the doped ceramic waveguide; and
   removing portions of the second upper cladding layer to form at least portions of additional optical structures of the optical device.
12. The method of item 11, wherein:
   the additional optical structures includes a multiplexer comprising a pump light input to receive a pump light, a wavelength division multiplexing (WDM) optical signal input to receive a WDM optical signal, and a combined optical signal output to which the multiplexer provides a combined optical signal comprising the pump light received via the pump light input and the WDM optical signal received via the WDM optical signal input; and
   the doped ceramic waveguide comprises a waveguide input coupled to the combined optical signal output of the multiplexer to receive the combined optical signal provided by the multiplexer; and
   the rare-earth dopants of the doped ceramic waveguide impart the WDM optical signal of the combined optical signal with optical gain as the pump light and the WDM optical signal of the combined optical signal propagate along the doped ceramic waveguide.
13. The method of item 12, wherein:
   the additional optical structures include a filter coupled to a waveguide output of the doped ceramic waveguide to receive residual pump light and the WDM optical signal; and
   the filter is configured to filter the residual pump light from the WDM optical signal and provide the WDM optical signal to a WDM optical signal output.
14. The method of item 12, wherein:
   the additional optical structures include an optical signal combiner and a ring cavity;
   the optical signal combiner comprises a pump light input to receive pump light, a residual pump light input to receive residual pump light, and pump light output coupled to the pump light input of the multiplexer;
   the optical signal combiner is configured to provide its pump light output with pump light comprising the pump light received via its pump light input and the residual pump light received via its residual pump light input; and
   the ring cavity is configured to direct residual pump light from a waveguide output of the doped ceramic waveguide to the residual pump light input of the optical signal combiner.
15. The method of item 12, wherein:
   the additional optical structures include an optical signal combiner, a demultiplexer, and a ring cavity;
   the optical signal combiner comprises a pump light input to receive pump light, a residual pump light input to receive residual pump light, and pump light output coupled to the pump light input of the multiplexer;
   the optical signal combiner is configured to provide its pump light output with pump light comprising the pump light received via its pump light input and the residual pump light received via its residual pump light input;
   the demultiplexer is coupled to a waveguide output of the doped ceramic waveguide to receive the residual pump light; and
   the demultiplexer is configured to direct the residual pump light from the waveguide output to the residual pump light input of the optical signal combiner via the ring cavity.
16. The method of item 15, wherein the demultiplexer is configured to direct the WDM optical signal received from the waveguide output to a WDM optical signal output.
17. The method of item 12, wherein:
   the additional optical structures include a demultiplexer and a wavelength reference bank;
   the demultiplexer is coupled to a waveguide output of the doped ceramic waveguide to receive the WDM optical signal; and
   the demultiplexer is configured to direct the WDM optical signal from the waveguide output to the multiplexer via the wavelength reference bank.
18. The method of item 17, wherein the demultiplexer is configured to direct WDM lasing lights received from the waveguide output to WDM lasing light outputs.
19. The method of item 17, wherein:
   the additional optical structures includes an optical signal combiner and a ring cavity;
   the optical signal combiner comprises a pump light input to receive pump light, a residual pump light input to receive residual pump light, and a pump light output coupled to the pump light input of the multiplexer;
   the optical signal combiner is configure to provide its pump light output with pump light comprising the pump light received via its pump light input and the residual pump light received via its residual pump light input; and
   the ring cavity is configured to direct residual pump light from the waveguide output to the residual pump light input of the optical signal combiner.
20. The method of item 19, wherein the demultiplexer is configured to direct WDM lasing lights received from the waveguide output to WDM lasing light outputs.

The present disclosure includes reference to certain examples, however, it will be understood by those skilled in the art that various changes may be made and equivalents may be substituted without departing from the scope of the disclosure. In addition, modifications may be made to the disclosed examples without departing from the scope of the present disclosure. For example, various embodiments of single stage optical amplifiers have been disclosed. However, features of such optical amplifiers may be expanded to multi-stage amplifiers on a chip or multiple single amplifier chips may be cascaded to attain high gain or optical output power. Therefore, it is intended that the present disclosure not be limited to the examples disclosed, but that the disclosure will include all examples falling within the scope of the appended claims.

## Claims

1. An optical device, comprising:
a multiplexer comprising a pump light input to receive a pump light, a wavelength division multiplexing (WDM) optical signal input to receive a WDM optical signal, and a combined optical signal output to which the multiplexer provides a combined optical signal comprising the pump light received via the pump light input and the WDM optical signal received via the WDM optical signal input; and
a ceramic waveguide comprising a waveguide input coupled to the combined optical signal output of the multiplexer to receive the combined optical signal provided by the multiplexer; and
wherein the ceramic waveguide comprises rare-earth dopants that impart the WDM optical signal of the combined optical signal with optical gain as the pump light and the WDM optical signal of the combined optical signal propagate along the ceramic waveguide.

2. The optical device of claim 1, comprising:
a filter coupled to a waveguide output of the ceramic waveguide to receive residual pump light and the WDM optical signal; and
wherein the filter is configured to filter the residual pump light from the WDM optical signal and provide the WDM optical signal to a WDM optical signal output.

3. The optical device of any one of the preceding claims, comprising:
an optical signal combiner comprising a pump light input to receive pump light, a residual pump light input to receive residual pump light, and pump light output coupled to the pump light input of the multiplexer, wherein the optical signal combiner is configured to provide its pump light output with pump light comprising the pump light received via its pump light input and the residual pump light received via its residual pump light input; and
a ring cavity configured to direct residual pump light from a waveguide output of the ceramic waveguide to the residual pump light input of the optical signal combiner.

4. The optical device of any one of the preceding claims, comprising
an optical signal combiner comprising a pump light input to receive pump light, a residual pump light input to receive residual pump light, and pump light output coupled to the pump light input of the multiplexer, wherein the optical signal combiner is configured to provide its pump light output with pump light comprising the pump light received via its pump light input and the residual pump light received via its residual pump light input;
a demultiplexer coupled to a waveguide output of the ceramic waveguide to receive the residual pump light; and
a ring cavity configured between the demultiplexer and the optical signal combiner; and
wherein the demultiplexer is configured to direct the residual pump light from the waveguide output to the residual pump light input of the optical signal combiner via the ring cavity.

5. The optical device of claim 4, wherein the demultiplexer is configured to direct the WDM optical signal received from the waveguide output to a WDM optical signal output.

6. The optical device of any one of the preceding claims, comprising:
a demultiplexer coupled to a waveguide output of the ceramic waveguide to receive the WDM optical signal; and
a wavelength reference bank between the multiplexer and the demultiplexer; and
wherein the demultiplexer is configured to direct the WDM optical signal from the waveguide output to the multiplexer via the wavelength reference bank.

7. The optical device of claim 6, wherein the demultiplexer is configured to direct WDM lasing lights received from the waveguide output to WDM lasing light outputs.

8. The optical device of claim 6 or 7, comprising:
an optical signal combiner comprising a pump light input to receive pump light, a residual pump light input to receive residual pump light, and a pump light output coupled to the pump light input of the multiplexer, wherein the optical signal combiner is configure to provide its pump light output with pump light comprising the pump light received via its pump light input and the residual pump light received via its residual pump light input; and
a ring cavity configured to direct residual pump light from the waveguide output to the residual pump light input of the optical signal combiner.

9. A method of forming an optical device, the method comprising:
forming a lower cladding layer on a substrate;
forming a doped ceramic layer on the lower cladding layer using a plasma-assisted process that deposits and co-dopes a ceramic material with rare-earth dopants;
forming a first upper cladding layer on the doped ceramic layer; and
removing portions of the first upper cladding layer and the doped ceramic layer to form a doped ceramic waveguide.

10. The method of claim 9, comprising:
forming a second upper cladding layer over the first upper cladding layer and the doped ceramic waveguide; and
removing portions of the second upper cladding layer to form at least portions of additional optical structures of the optical device.

11. The method of claim 10, wherein:
the additional optical structures include a multiplexer comprising a pump light input to receive a pump light, a wavelength division multiplexing (WDM) optical signal input to receive a WDM optical signal, and a combined optical signal output to which the multiplexer provides a combined optical signal comprising the pump light received via the pump light input and the WDM optical signal received via the WDM optical signal input; and
the doped ceramic waveguide comprises a waveguide input coupled to the combined optical signal output of the multiplexer to receive the combined optical signal provided by the multiplexer; and
the rare-earth dopants of the doped ceramic waveguide impart the WDM optical signal of the combined optical signal with optical gain as the pump light and the WDM optical signal of the combined optical signal propagate along the doped ceramic waveguide.

12. The method of claim 11, wherein:
the additional optical structures include a filter coupled to a waveguide output of the doped ceramic waveguide to receive residual pump light and the WDM optical signal; and
the filter is configured to filter the residual pump light from the WDM optical signal and provide the WDM optical signal to a WDM optical signal output.

13. The method of claim 11 or 12, wherein:
the additional optical structures include an optical signal combiner and a ring cavity;
the optical signal combiner comprises a pump light input to receive pump light, a residual pump light input to receive residual pump light, and pump light output coupled to the pump light input of the multiplexer;
the optical signal combiner is configured to provide its pump light output with pump light comprising the pump light received via its pump light input and the residual pump light received via its residual pump light input; and
the ring cavity is configured to direct residual pump light from a waveguide output of the doped ceramic waveguide to the residual pump light input of the optical signal combiner.

14. The method of any one of claims 11 to 13, wherein:
the additional optical structures include an optical signal combiner, a demultiplexer, and a ring cavity;
the optical signal combiner comprises a pump light input to receive pump light, a residual pump light input to receive residual pump light, and pump light output coupled to the pump light input of the multiplexer;
the optical signal combiner is configured to provide its pump light output with pump light comprising the pump light received via its pump light input and the residual pump light received via its residual pump light input;
the demultiplexer is coupled to a waveguide output of the doped ceramic waveguide to receive the residual pump light; and
the demultiplexer is configured to direct the residual pump light from the waveguide output to the residual pump light input of the optical signal combiner via the ring cavity, and wherein, optionally, the demultiplexer is configured to direct the WDM optical signal received from the waveguide output to a WDM optical signal output.

15. The method of any one of claims 11 to 14, wherein:
the additional optical structures include a demultiplexer and a wavelength reference bank;
the demultiplexer is coupled to a waveguide output of the doped ceramic waveguide to receive the WDM optical signal; and
the demultiplexer is configured to direct the WDM optical signal from the waveguide output to the multiplexer via the wavelength reference bank, and wherein, optionally,
a) the demultiplexer is configured to direct WDM lasing lights received from the waveguide output to WDM lasing light outputs, and/or
b) the additional optical structures include an optical signal combiner and a ring cavity;
the optical signal combiner comprises a pump light input to receive pump light, a residual pump light input to receive residual pump light, and a pump light output coupled to the pump light input of the multiplexer;
the optical signal combiner is configure to provide its pump light output with pump light comprising the pump light received via its pump light input and the residual pump light received via its residual pump light input; and
the ring cavity is configured to direct residual pump light from the waveguide output to the residual pump light input of the optical signal combiner, wherein, optionally, the demultiplexer is configured to direct WDM lasing lights received from the waveguide output to WDM lasing light outputs.
